# EUROPEAN PATENT APPLICATION

(11) **EP 4 296 873 A1**
(43) Date of publication of application: **27.12.2023**
(21) Application number: 22184667.8
(22) Date of filing: 13.07.2022
(51) Int. Cl.: G06F 21/60, G06F 21/62, H04L 9/08, H04L 9/40

(54) **SECURE HIGH SCALE CRYPTOGRAPHIC COMPUTATION THROUGH DELEGATED KEY ACCESS**

(30) Priority: 22.06.2022 US 202217846648
(71) Applicant: Palantir Technologies Inc., Denver, CO 80202 (US)
(72) Inventor: Dobbelaere, Hugo, 75015 Paris (FR); Patil, Mihir, New York, 10014 (US); Telling, Morten, Copenhagen (DK); Kruszewski, Robert, London, W1U 5BJ (GB); Wee, Yeong Wei, 259290 Singapore (SG)
(74) Representative: Trichard, Louis

(57) **Abstract**

An apparatus, computer-implemented method and computer program are disclosed for performing a cryptographic operation in a high-trust (HT) environment. The HT environment including a compute service and key storage service. The compute service receives from a user device, a user request for performing a cryptographic operation on at least a portion of a large-scale dataset. The user request including a user token associated with a user of the user device. The compute service sends to the key storage service, a cryptographic key access request corresponding to the received user request. The cryptographic key access request including data representative of the user token and/or a compute service token. The key storage service determines from the user token and/or compute service token whether the user has permission to have the cryptographic operation performed and/or whether to grant the compute service access to data representative of the cryptographic key in relation to the requested cryptographic operation when user has permission. In response to the key storage service granting access to the compute service, the key storage service sends to the compute service the requested cryptographic key/algorithm associated with the cryptographic operation of the user request. The compute service performs the cryptographic operation on the portion of the large-scale dataset based on the received cryptographic key/algorithm.

## Description

### Field of the disclosure

The present disclosure relates to methods, systems and computer programs for delegating key access/cryptographic computation and securely performing high scale cryptographic operations/computations on large-scale datasets without revealing the cryptographic key or algorithm to users of the large-scale dataset.

### Background

In conventional cryptographic systems when a user applies cryptographic operations (e.g. encryption, decryption, hashing and the like) to large-scale datasets, the user requires direct access to the cryptographic keys and secrets in plaintext when applying said cryptographic operations. This is a vulnerable point in the workflow as the user could replicate the cryptographic key for other purposes, or share it with unauthorized users. The resulting encrypted large-scale dataset is not secure.

### Summary

According to a first aspect, there is provided a computer-implemented method for performing a cryptographic operation in a high-trust environment comprising a compute service and key storage service, the method comprising:
receiving, at the compute service from a user device, a user request for performing a cryptographic operation on at least a portion of a large-scale dataset, the user request including a user token associated with a user of the user device;
sending, by the compute service to the key storage service, a cryptographic key access request corresponding to the received user request, the cryptographic key access request including data representative of the user token and/or a compute service token;
processing, at the key storage service, the user token and/or compute service token to determine whether the user has permission to have the cryptographic operation performed and/or whether to grant the compute service access to data representative of the cryptographic key associated with the cryptographic operation of the user request when user has permission;
in response to the key storage service granting access to the compute service, performing the steps of:
   sending, from the key storage service, data representative of the requested cryptographic key and the cryptographic algorithm associated with the cryptographic operation of the user request;
   cryptographically processing, by the compute service, the portion of the large-scale dataset based on the received cryptographic key and cryptographic algorithm; and
   sending a user response indicating the portion of the large-scale dataset has been cryptographically processed;
in response to the key storage service determining user does not have permission and/or denying cryptographic key access to the compute service, sending, by the compute service, a user response indicating denial of the user request.

According to a second aspect, there is provided a computer-implemented method for performing a cryptographic operation by a compute service in a high-trust environment comprising the compute service and a key storage service, the method comprising:
receiving, from a user device, a user request for performing a cryptographic operation on at least a portion of a large-scale dataset, the user request including a user token associated with a user of the user device;
sending, to the key storage service, a cryptographic key access request corresponding to the received user request, the cryptographic key access request including data representative of the user token and/or a compute service token, wherein the key storage service is configured to process the user token and/or compute service token for determining whether the user has permission to have the cryptographic operation performed and/or whether to grant the compute service access to data representative of the cryptographic key associated with the cryptographic operation of the user request when user has permission;
in response to the key storage service granting cryptographic access to the compute service, performing the steps of:
   receiving, from the key storage service, data representative of the requested cryptographic key and the cryptographic algorithm associated with the cryptographic operation of the user request;
   cryptographically processing the request portion of the large-scale dataset based on the received cryptographic key and cryptographic algorithm; and
   sending, to the user device, a user response indicating the portion of the large-scale dataset has been cryptographically processed;
in response to the key storage service determining user does not have permission and/or denying cryptographic key access to the compute service based on the user token and/or compute service token, sending, to the user device, a user response indicating denial of the user request.

According to a third aspect, there is provided a computer-implemented method for performing a cryptographic operation by a key storage service in a high-trust environment comprising a compute service and the key storage service, the method, performed by the key storage service, comprising:
receiving, from the compute service, a cryptographic key access request corresponding to a user request for performing a cryptographic operation on at least a portion of a large-scale dataset, the user request including a user token associated with a user of the user device, the cryptographic key access request including data representative of the user token and/or a compute service token;
processing the user token and/or compute service token to determine whether the user has permission to have the cryptographic operation performed and/or whether to grant the compute service access to data representative of the cryptographic key associated with the cryptographic operation of the user request when user has permission;
in response to the key storage service granting access to the compute service, sending, from the key storage service, data representative of the requested cryptographic key and the cryptographic algorithm associated with the cryptographic operation of the user request, wherein the compute service cryptographically processes the portion of the large-scale dataset based on the received cryptographic key and cryptographic algorithm.

The computer-implemented method of any of the first, second or third aspects, wherein each user is associated with a cryptographic license stored in the high trust environment, and the method may further comprise: determining whether said user has permission to request said cryptographic operation based on retrieving the cryptographic license associated with the user based on said user token.

The computer-implemented method of any of the first, second or third aspects, the method further comprising:
sending, by the compute service to the key storage service, the cryptographic key access request corresponding to the received user request, the cryptographic key access request including data representative of the user token and the compute service token.

The computer-implemented method of any of the first, second or third aspects, the method further comprising:
sending, by the compute service to the key storage service, a first cryptographic key access request corresponding to the received user request, the first cryptographic key access request including data representative of the user token;
processing, at the key storage service, the user token to determine whether the user has permission to have the cryptographic operation performed;
in response to the key storage service determining the user has permission, sending, by the compute service to the key storage service, a second cryptographic key access request corresponding to the received user request, the second cryptographic key access request including data representative of the compute service token; and
processing, at the key storage service, the compute access token to determine whether to grant the compute service access to data representative of the cryptographic key associated with the cryptographic operation of the user request when user has permission.

The computer-implemented method of any of the first, second or third aspects, wherein the key storage service previously granted the user permission to a previous user request, the method further comprising:
receiving a further request associated with the previous user request, and sending, by the compute service to the key storage service, the cryptographic key access request corresponding to the received request, the cryptographic key access request including data representative of the compute service token; and processing, at the key storage service, the compute access token to determine whether to grant the compute service access to data representative of the cryptographic key associated with the cryptographic operations of the request when user has permission.

The computer-implemented method of any of the first, second or third aspects, the method may further comprise: determining whether said compute service is authorized to perform said cryptographic operation on at least said portion of the large-scale dataset based on said compute service token.

The computer-implemented method of any of the first, second or third aspects, wherein the compute service token is generated for the compute service when the compute service operates in the high trust environment, and the method may further comprise: determining whether said compute service is authorized to perform said cryptographic operation further comprising determining the compute service operates in the high trust environment based on said compute service token.

The computer-implemented method of any of the first, second or third aspects, wherein the compute service operates in the high trust environment when the compute service only executes cryptographic operations approved or authorized by the operator of the high trust environment.

The computer-implemented method of any of the first, second or third aspects,, wherein each authorized user is linked to a cryptographic license stored within the high trust environment, each cryptographic license of an authorized user specifying data representative of permissions for said user to have one or more cryptographic operations performed in relation to corresponding data of a large-scale dataset, said processing the user token further comprising:
determining the user of the user device providing the user token is an authorized user;
retrieving a linked cryptographic license corresponding to the authorized user; and
determining whether said authorized user has permissions to request one or more cryptographic operations to be performed on at least said portion of the large-scale dataset based on the retrieved cryptographic license.

The computer-implemented method of any of the first, second or third aspects, wherein the one or more cryptographic operations comprises at least one from the group of: encryption; decryption; hashing; and/or any other cryptographic function or operation.

The computer-implemented method of any of the first, second or third aspects, wherein the one or more cryptographic operations comprises an encryption cryptographic operation and the portion of the large-scale dataset is at least one from the group of: a bulk dataset or full dataset.

The computer-implemented method of any of the first, second or third aspects, wherein the one or more cryptographic operations comprises an encryption or decryption cryptographic operation to be performed on the portion of the large-scale dataset, wherein the portion of large-scale dataset is large enough that the key storage service is incapable of performing the encryption or decryption operation, wherein the compute service has the computing resources to perform the encryption or decryption of the portion of the large-scale dataset.

The computer-implemented method of any of the first, second or third aspects, wherein the one or more cryptographic operations comprises a decryption cryptographic operation and the portion of the large-scale dataset is determined to be small enough for the key storage service to perform the decryption on the portion of the large-scale dataset.

According to a fourth aspect, there is provided a computer program comprising instructions that when executed by computing apparatus cause it to perform the method of any of the first, second or third aspects.

According to a fifth aspect, there is provided a computing apparatus configured to perform the method of any of the first, second or third aspects.

According to a sixth aspect, there is provided computer code stored in non-transitory memory and operable when executed by one or more processors to cause the one or more processors to perform a cryptographic operation in a high-trust environment comprising a compute service and key storage service based on the method according to the first aspect.

According to a seventh aspect, there is provided computer code stored in non-transitory memory and operable when executed by one or more processors to cause the one or more processors to perform a cryptographic operation by a compute service in a high-trust environment comprising the compute service and a key storage service based on the method according to the second aspect.

According to an eighth aspect, there is provided computer code stored in non-transitory memory and operable when executed by one or more processors to cause the one or more processors to perform a cryptographic operation by a key storage service in a high-trust environment comprising a compute service and the key storage service based on the method according to the third aspect.

According to a ninth aspect, there is provided computer apparatus for performing a cryptographic operation in a high-trust environment comprising a compute service and key storage service, the apparatus comprising one or more processors and non-transitory memory, and computer code stored in the non-transitory memory and operable when executed by the one or more processors to cause the one or more processors to perform the method according to the first aspect.

According to a tenth aspect, there is provided a computer apparatus for performing a cryptographic operation by a compute service in a high-trust environment comprising the compute service and a key storage service, the apparatus comprising one or more processors and non-transitory memory, and computer code stored in the non-transitory memory and operable when executed by the one or more processors to cause the one or more processors to perform the method according to the second aspect.

According to an eleventh aspect, there is provided a computer apparatus for performing a cryptographic operation by a key storage service in a high-trust environment comprising a compute service and the key storage service, the apparatus comprising one or more processors and non-transitory memory, and computer code stored in the non-transitory memory and operable when executed by the one or more processors to cause the one or more processors to perform the method according to the third aspect.

In various implementations, a computer program instructions, optionally stored on a non-transitory computer readable medium which, when executed by one or more processors of a data processing apparatus, causes the data processing apparatus to carry out the the program instructions to cause the one or more processors to perform operations comprising one or more aspects of the above- and/or below-described implementations (including one or more aspects of the appended claims).

In various implementations, apparatus are disclosed that comprise a computer readable storage medium having program instructions embodied therewith, and one or more processors configured to execute the program instructions to cause the apparatus to perform operations comprising one or more aspects of the above- and/or below-described implementations (including one or more aspects of the appended claims). The apparatus may comprise one or more processors or special-purpose computing hardware.

### Brief Description of the Drawings:

Example embodiments will now be described by way of non-limiting example with reference to the accompanying drawings, in which:

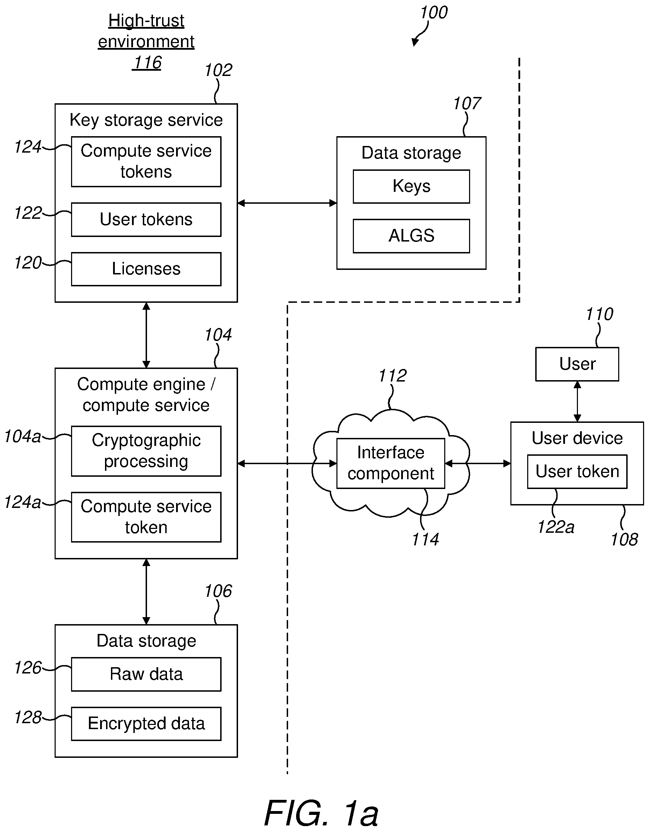

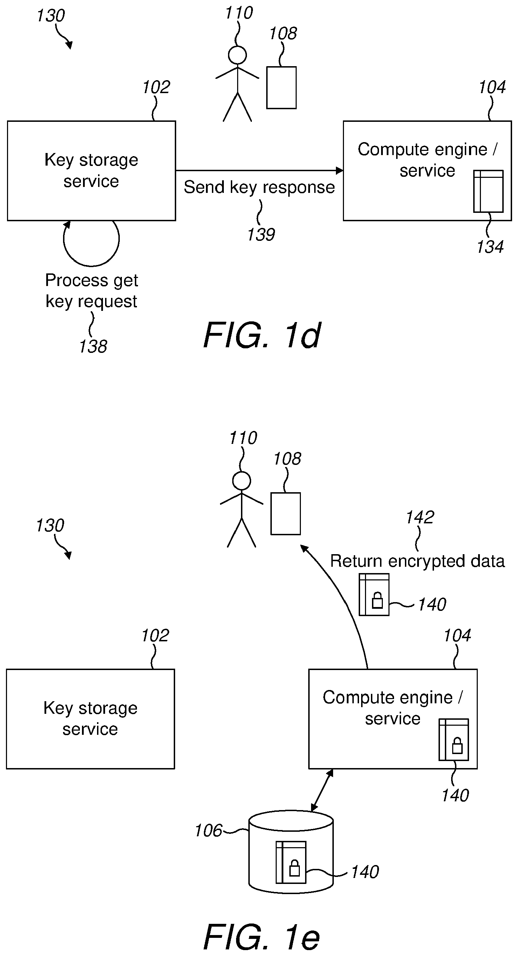

FIG. 1a is a block diagram illustrating a cryptographic system comprising a key storage service and a compute engine/service in a high trust environment according to some embodiments of this specification;

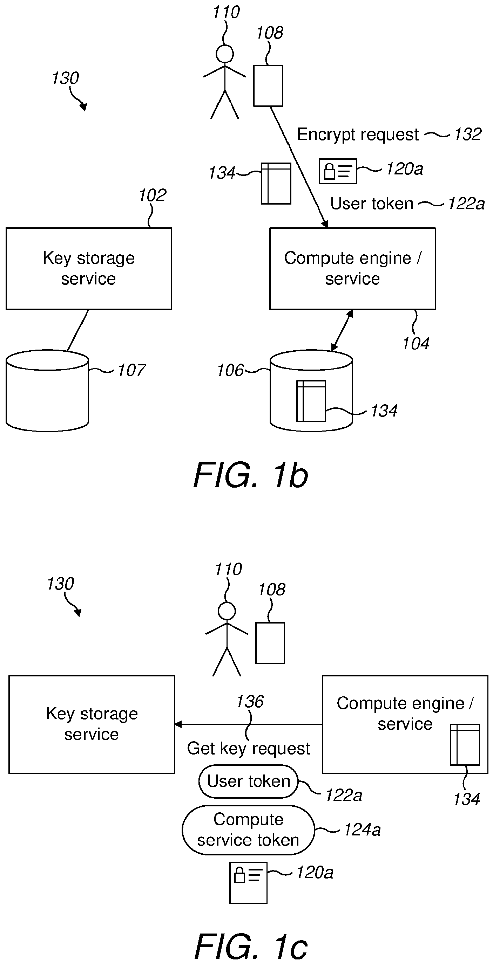

FIG. 1b is a block diagram illustrating a cryptographic system of FIG. 1a performing an encryption request of a bulk dataset using the key storage service and the compute engine/service in a high trust environment according to some embodiments of this specification;
FIG. 1c is a block diagram illustrating a cryptographic system of FIG. 1b performing an get key request for encrypting the bulk dataset using the key storage service and the compute engine/service in a high trust environment according to some embodiments of this specification;
FIG. id is a block diagram illustrating a cryptographic system of FIG. 1c processing the get key request and responding to the encryption request of the bulk dataset using the key storage service and the compute engine/service in a high trust environment according to some embodiments of this specification;
FIG. 1e is a block diagram illustrating a cryptographic system of FIG. id performing encryption of the bulk dataset using the key storage service and the compute engine/service in a high trust environment according to some embodiments of this specification;
FIG. 2 is a flow diagram indicating operations performed by the cryptographic system according to embodiments of this specification;
FIG. 3a is a flow diagram indicating operations performed by the compute engine/service according to embodiments of this specification;
FIG. 3b is a flow diagram indicating example operations performed by the compute engine/service according to embodiments of this specification;
FIG. 3c is a flow diagram indicating further example operations performed by the compute engine/service according to embodiments of this specification;
FIG. 4 is a flow diagram indicating operations performed by the key storage service according to some embodiments of this specification;
FIG. 5 is a block diagram of an apparatus that may be configured to perform the FIG.2, FIG. 3a-FIG. 3c and/or FIG. 4 operations;
FIG. 6 is a block diagram of a computer readable medium that may be configured to store instructions thereon, which when executed by a processor, performs the FIG.2, FIG. 3a-FIG. 3c and/or FIG. 4 operations.

### Detailed Description of Certain Embodiments

Embodiments of the present disclosure relate to a cryptography system that may include user tokens and cryptographic licenses created by an administrator that facilitate performance of secure and delegated cryptographic operations on large-scale datasets when requested by a user.

In some embodiments, a system for cryptography employs user tokens and cryptographic licenses. The system may include a key storage service and a compute service operating in a high trust environment, where the key storage service is configured to delegate the performance of cryptographic operations on large-scale datasets to the compute service when the computing resources of the key storage service are not capable of processing the large-scale datasets. The key storage service may have secure access to the cryptographic keys and algorithms, and cryptographic licenses assigned to the users.

Cryptographic licenses may include various permission levels to restrict access to the types of cryptographic operations that maybe requested by the user and performed on large-scale datasets by the compute service on behalf of the user. For example, a cryptographic license may grant a user the right to decrypt and/or encrypt certain portions of a large-scale dataset. A cryptographic license may provide varying degrees of decryption rights to a user or group of users, for example decrypting and/or encrypting a portion of a large-scale dataset (e.g., a plurality of individual values, rows, columns, etc.) or rate-limited decryption, such as decrypting a limited number of values per day.

In some example embodiments, when a user requires a compute job with cryptographic operations to be performed on large scale datasets and/or data associated with large scale datasets, the high-trust computing environment may enable only certain approved queries or cryptographic operations to be performed on the datasets. In this high-trust computing environment, the key storage service is communicatively coupled to the compute service. The compute service is configured for receiving requests from a user for compute jobs when performing cryptographic operations on at least a portion of a large-scale dataset. Each user request may include one or more of the cryptographic operations, an indication of the portion of the large-scale dataset that is to be operated on, and a user token. The user token is associated with a cryptographic license corresponding to the user. The cryptographic license provides a set of permissions to the user in relation to having cryptographic operations (e.g. encrypt/decrypt or hashing) applied to at least the portion of the large-scale dataset.

The compute service, on receiving the request from the user in relation to a compute job requiring cryptographic operations, transmits a cryptographic key request to the key storage service along with data representative of the user token and/or a compute service token. The key storage service uses the user token to determine whether the user is authorized and/or has permission to request the cryptographic operations on the indicated portions of the large-scale dataset. On receiving the compute service token, the key storage service uses the computer service token to determine whether to grant the compute service permission to perform the cryptographic operations on the indicated portions of the large-scale dataset when the user has is authorized and/or has permission. For example, this may be performed by the key storage service determining whether the user is authorized based on the user token and has permission, e.g. from cryptographic license associated with the user, to have the requested cryptographic operation performed on the requested portion of the dataset. If this is the case, the key storage service may use the received compute service token to also determine whether the compute service also has authority or trusted capability (i.e. is highly trusted or has the required level of trust) to be delegated to perform the cryptographic operations on the indicated portions of the large scale dataset in relation to the requested cryptographic operation on behalf of the user. For example, the compute service may be highly trusted if it only executes approved code, such approved code including the one or more cryptographic operations.

Although the cryptographic key request from the compute service may include data representative of a user token and a compute service token, this is by way of example only and the invention is not so limited, the skilled person would understand that multiple cryptographic key requests may be made by the compute service each one including a user token and/or compute service token depending on whether the user needs authorization and/or permission for having a compute job with cryptographic operations to be performed by the compute service and/or the compute service requires permission to perform the compute job as it satisfies the requirements of operating in the high trust environment. For example, the compute service may receive a request from a user to perform a compute job with cryptographic operations, where a first cryptographic request may include data representative of the user token to determine whether the user has permission to have the cryptographic operations performed, and when the compute service is ready to perform the cryptographic operations when the user has permission, the compute service may send a second cryptographic request including data representative of the compute service token to the key storage service (after it is determined the user has permission) for checking whether permission is granted to the compute service for performing the cryptographic operations on behalf of the user. The compute service may then receive the required cryptographic data (e.g. keys and/or algorithms) from the key storage service for performing the cryptographic operations on behalf of the user.

In another example, should the user require the same compute job, which includes cryptographic operations on an indicated large-scale dataset, to be performed multiple times or according to a schedule, the first cryptographic request including the user token does not necessarily need to be performed again for each subsequent compute job that is the same. Rather the compute service may simply perform the compute job according to the schedule, where only the second cryptographic request with the compute service token is sent to the key storage service prior to performing each of the scheduled compute jobs on behalf of the user. The action of performing the compute job with compute service doesn't necessarily need to be performed by the user every time, as this action may be delegated to a scheduler. For example, a job scheduler within the trusted environment may be configured to request the compute service to perform the compute job based on a schedule, where, after each request, the compute service provides the compute service token to the key storage service prior to performing each compute job. This provides the advantage of efficient use of the key storage service resources, where there is no need to re-send the user token for the same compute job if it is to be run again by the compute service. So long as the user does not change the content of the compute job, then after the first cryptographic request including the user token and the first time the key storage service authorizes the user can have the compute job performed using the compute service, there is no need to re-send the user token for that compute job if it is to be run again by the compute service. The action of requesting the re-running of the compute job may be delegated to a scheduler. On requesting subsequent requests, the compute service simply resends its compute service token to determine whether it is still granted permission (e.g. the compute service still operates within the required high trust environment) to perform the cryptographic operations of the compute job.

In another example, when a user changes the content of a compute job that is required to perform cryptographic operations, the user sends a request for the compute service to perform the changed compute job along with the user token, where the compute service sends a cryptographic request with the user's token to the key storage service to check the user is authorised and has permission to have the changed compute job perform the cryptographic operations. If the key storage service determines the user has permission/authorisation, then it grants the compute service permission to perform the same operation on behalf of user. When compute service runs the compute job, the compute service sends the compute service token to the key storage service to check whether: a) the compute service can perform the cryptographic operations on behalf of user, and b) the compute service is high trust or operates in the required high trust environment. If this is the case, then the key storage service grants the compute service access to the required cryptographic data (e.g. cryptographic keys and;/or algorithms) required by the compute service to perform the cryptographic operations on behalf of the user.

In some embodiments, subsequent cryptographic requests for the same compute job requested by a user may include the compute token and the associated user token or user identifier to enable the key storage service to retrieve the required cryptographic data associated with the user after granting the compute service permission to perform the cryptographic operations. This may also enable the key storage service to internally check that the user has already been authorised for each subsequent cryptographic request that it receives from the compute service in relation to the user and already authorised compute jobs.

In any event, if both determinations are affirmative, then the key storage service grants the compute service access to the cryptographic key and also cryptographic algorithm associated with the cryptographic license of the user, which enables the compute service to encrypt/decrypt and/or hash the indicated portion of the large scale dataset on behalf of the user and without providing the user access to the cryptographic key or even the cryptographic algorithm used to encrypt/decrypt or hash said indicated portion of the large-scale data set. As an option, after running the compute job, the compute service may securely remove or delete the cryptographic data (e.g. cryptographic key and/or cryptographic algorithm) used during performance of the cryptographic operations on behalf of the user.

This means a user does not need direct access to the cryptographic keys to perform cryptographic operations (e.g., such as encryption or decryption) on data via the encryption algorithm associated with the channel. The cryptographic keys can be stored in the key storage service or an external storage service, and accessed via the key storage service through the use of user tokens, compute service tokens and cryptographic licenses. Thus, access to performing cryptographic operations on large-scale datasets, such as encryption/decryption, can be restricted by the cryptographic licenses, user token and compute service token while a user does not have access (e.g., direct or indirect access) to the cryptographic keys and cryptographic algorithms used for securing and/or accessing the large-scale dataset.

The cryptography system as discussed herein may be used in a variety of circumstances with any type of large-scale datasets, such as military, law enforcement, healthcare, finance (e.g., banks or other financial institutions), supply chain, call centers and/or any other situations wherein it may be desirable to use cryptography to handle sensitive data.

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

Data Storage: Any computer readable storage medium and/or device (or collection of data storage mediums and/or devices). Examples of data stores include, but are not limited to, optical disks (e.g., CD-ROM, DVD-ROM, etc.), magnetic disks (e.g., hard disks, floppy disks, etc.), memory circuits (e.g., solid state drives, randomaccess memory (RAM), etc.), and/or the like. Another example of a data store is a hosted storage environment that includes a collection of physical data storage devices that may be remotely accessible and may be rapidly provisioned as needed (commonly referred to as "cloud" storage).

Database: Any data structure (and/or combinations of multiple data structures) for storing and/or organizing data, including, but not limited to, relational databases (e.g., Oracle databases, MySQL databases, etc.), non-relational databases (e.g., NoSQL databases, etc.), in-memory databases, spreadsheets, as comma separated values (CSV) files, eXtendible markup language (XML) files, TeXT (TXT) files, flat files, spreadsheet files, and/or any other widely used or proprietary format for data storage. Databases are typically stored in one or more data storages. Accordingly, each database referred to herein (e.g., in the description herein and/or the figures of the present application) is to be understood as being stored in one or more data storages.

Cryptography System (or simply a "System"): A system to facilitate userfriendly, secure and delegated cryptography. May include one or more of the numerous features discussed herein, such as key storage service, compute service, cryptographic licenses, user tokens, compute service tokens and high trust environments.

Cryptographic Key (also referred to herein as a key): Data that may be required to perform cryptographic operations such as encryption and decryption.

Cryptographic Algorithm (also referred to herein as algorithm): Data, instructions or code that may be used to perform cryptographic operations such as encryption and decryption on data or portions of large-scale datasets.

Cryptographic Operations (also referred to herein as operations): cryptographic operations such as encryption, decryption and/or hashing that maybe requested to be performed on data by a user using the cryptography system described herein.

Encrypted Data Values: Individual encrypted data items, where a data item may be any size or type of data, such as a single character, a word, a section, a cell, a row, a column, etc. Encrypted data values may be associated with channel identifiers.

Encrypted Data: Raw data that has been obfuscated by a cryptographic operation. Encrypted data may include one or more encrypted data values.

Raw Data Values: Individual raw data items, where a data item may be any size or type of data, such as a single character, a word, a section, a cell, a row, a column, etc. Examples may include a name or an account number.

Raw Data: Data that may comprise sensitive information such as personal identification information (PII). Raw data may include one or more raw data values.

Permissions: Rights specified in a cryptographic license and granted to a user with access to the cryptographic license, which may allow the user to have cryptographic operations performed on data or indicated portions of a large scale dataset according to those rights. Example permissions include single-value operations and/or bulk operations.

Cryptographic License (or simply "License"): A license may be user-specific or may be associated with multiple users and/or groups of users such that users may have access to the license. A license may be shared with other users so that the users with whom a license is shared have access to the license. A user that is associated with (e.g., has access to) a license, as well as appropriate permissions within the license, may have cryptographic operations performed in relation to that license. A user must have access to a license to have cryptographic operations performed using the compute and/or key storage services of the cryptography system described herein. Licenses may specify permissions of an authenticated user to have cryptographic operations performed.

Administrator: An individual, group of individuals, or entity that may use the cryptography system to create user tokens, compute tokens, and/or cryptographic licenses. An administrator may also be a user.

User: An individual, group of individuals, or entity that may use the cryptography system to request cryptographic operations to be performed according to the cryptographic licenses created by the administrator. The user may use the cryptography system via various front-end applications that display data to the user. For example, the cryptography system may be configured for multi-tenancy user, such as to provide access to and licenses from multiple user devices and software applications. A user may also be an administrator.

High trust computing environment (or simply high trust environment): a computing environment comprising one or more trusted computational and/or storage nodes communicatively coupled together. Said computational and/or storage nodes are configured to trust each other. In addition, high trust environment is one in which only highly trusted code may executed inside the compute engine and/or key storage service. Users can be authenticated in the system, but are unable to write and execute code within the nodes of the high trust environment. For example, a compute service in the high trust environment may only perform or execute certain approved operations on the compute engine, which in this case is encryption and/or other cryptographic operations.

Key storage service: a computational/storage node configured for storing cryptographic keys, mappings between authorized users, cryptographic licenses of said authorized users, user tokens of said authorised users, and corresponding cryptographic keys and/or algorithms associated with the authorized users and/or user tokens for use in performing cryptographic operations on data representative of large-scale datasets.

Compute service/engine: a computational node configured with the computing resources for performing at least cryptographic operations on data associated with a large-scale dataset.

User token: data permitting a user of the system to request one or more cryptographic operations on data associated with a large-scale dataset. This data may be in the form of a user access token, which after a user successfully authenticates and authorizes access with the compute service, it receives a user access token. The user access token may be used as a credential by compute service and/or key storage service that the bearer of the token has been authorized to request, according to a corresponding cryptographic license, cryptographic operations and/or access to the cryptographic services provided by compute service and/or key storage service.

Compute service token: data permitting a compute service in a high trust environment to perform cryptographic operations on data of a large-scale dataset. This data may be in the form of a compute service access token, which indicates compute service is a trusted system or part of a high-trust environment that key storage service may provide cryptographic keys/algorithms to for performing said cryptographic operations.

Although some other techniques for encrypting/decrypting large amounts of data may rely on a cryptographic computation service or compute service that is better suited for large-scale datasets (e.g.: a Spark cluster), the service responsible for key storage and permission management still needs to send the cryptographic key to this compute service so that the latter can perform cryptographic operations. In most environments, this need to send the cryptographic key typically results in the user being able to extract the cryptographic key directly or indirectly. This is a vulnerable point in the workflow, where the user can replicate the cryptographic key for other purposes, or share it with unauthorized users.

Example embodiments relate to alleviating or overcoming such issues by ensuring that the compute service operates in high trust environment using user tokens, compute service tokens, cryptographic licenses linked thereto. These are configured to be used in the cryptographic system to ensure: 1) a user who has permission to encrypt/decrypt large amounts of data should not be able to see the cryptographic key; 2) a user who has access to the compute service but not the key storage service should not be able to perform encryption/decryption at scale; and 3) a user should not be able to extract the cryptographic key from the compute service.

FIG. 1a is a block diagram depicting an example implementation of a cryptographic system 100 comprising and various devices 102, 104 and 108 that may interact therewith. In this example, the example cryptography system 100 comprises a key storage service 102, a compute engine/compute service 104 that provides cryptographic processing 104a, data storage 106 and 107, a user device 108 of a user 110 communicatively coupled together. In this example, the key storage service 102 is in communication with the compute engine 104 in a high trust environment 116. The compute engine 104 is also in communication with data storage 106 in the high trust environment 116. The user device 108 may be communicatively coupled via a communication network to, in this example, the compute engine 104. The key storage service 102 includes one or more cryptographic license(s) 120, one or more user tokens 122 and one or more compute service tokens 124. As discussed in further detail below, the cryptographic licenses 120, user tokens 122, and compute service tokens 124 may be used by the key storage service 102 to delegate cryptographic operations requested by users to the compute engine 104 according to permissions of their associated cryptographic license(s) 120.

The cryptography system 100 may also be in communication with other devices, such as an administrator (or "admin") device (not shown) and a plurality of user devices, or in this example user device 108, such as via the communication network 112 comprising any combination of wired and wireless communication networks, such as without limitation, for example one or more wireless or wired LANs, WANs, and/or the Internet. An administrator and/or user 110 may interact with the cryptography system 100 via their respective devices 108. An interface component 114 may be configured to generate interactive user interfaces for display on the admin device and/or user device 108. For example, the interface component 114 may comprise a front-end application (e.g., standalone or browser based) that is executed on the admin and/or user devices to allow the administrator and/or user to interact with the cryptography system 100.

In some implementations, admin device and user device 108 may be the same device. In some implementations, administrator and user 110 may be the same individual, group of individuals, or entity. In some implementations, any number of devices 108 may exist and any number of administrators and users 110 may exist.

The user interfaces may be interacted with by an administrator to update information regarding the cryptography system 100, such as creating cryptographic licenses 120, user tokens 122, and compute service tokens 124. A user 110 may interact with the cryptography system 100 via various front-end applications that are configured to communicate via the interface component 114 with the cryptography system 100 to request cryptographic operations (e.g. a compute job with cryptographic operations) to be performed by compute engine 104 such as encrypting and decrypting of large-scale data, portions of large-scale data sets, as discussed further below.

The compute engine 104 maybe in communication with a data storage 106. The data storage 106 may be configured to operate as a database for storing raw data 126 and/or encrypted data 128 of large-scale datasets and the like. The key storage service 102 may also be in communication with a data storage 107. The data storage 107 may be configured to store elements of the cryptography system 100 such as cryptographic key(s), cryptographic algorithm(s), cryptographic license(s), and/or other related information such as user tokens 122 and/or compute service tokens 124. In some embodiments, the data storage 106 and/or 107 may comprise one or more storage devices local to the compute engine 104 and/or key storage service 102, respectively, of the cryptography system 100. In other embodiments, the data storage 106 and/or 107 is located external and/or remote to the respective compute engine 104 and/or key storage service 102 of the cryptography system 100, for example in the cloud, an external storage service or a third-party database and the like.

The user device 108 may be any of a variety of types of devices that include at least a display, a processor, and communication capabilities that provide access to the network 112 (e.g., a smart phone, a tablet computer, a personal digital assistant (PDA), a personal navigation device (PND), a handheld computer, a desktop computer, a laptop or netbook, or a wearable computing device), and may be operated by a user (e.g., a person) to exchange data with other components of the cryptographic system 100 that pertains to various functions and aspects associated with the cryptographic system 100 and its users. The data exchanged between the user device 108 and the compute engine 104 involve user-selected functions available through one or more user frontend interfaces (UIs) components 114. The UIs maybe specifically associated with a web client (e.g., a browser) or an application executing on the user device 108 that is in communication with the compute engine 104. For example, the cryptographic system 100 may provide user interfaces to a user 110 of the user device 108 (e.g., by communicating a set of computer-readable instructions to the user device 108 that cause the user device 108 to display the user interfaces) that allow the user to make user requests for cryptographic operations to be performed by compute engine 104 on portions of a large-scale dataset or large-scale datasets, which, once processed may be stored in data storage 106 and/or provided to the user device 108 of the user 110.

In some embodiments, each user 110 of a user device 108 may be assigned a user token 122a that may be dynamically generated by the cryptographic system 100 (e.g. an authenticator component and the like) and provided to user device 108 in response to successful authentication or login of the user 110 to cryptographic system 100 via interface component 114. The user token 122a may be stored in data storage 107 by key storage service 102 in a set of user tokens 122 associated with each of the users of the cryptographic system 100. In some embodiments, the user token 122a may be a single-use token and/or changed, updated or regenerated on a periodic basis. In some embodiments the generated user token 122a may be a Multipass (RTM) token generated based on Multipass (RTM) technology/techniques. Each user token 122a of the set of user tokens 122 may be associated with the corresponding user 110. The key storage service 102 may store in data storage 107 an association between each generated user token 122a of the set of user tokens 122 with the corresponding user 110.

Initial authentication of the user 110 may take the form of authenticating a user 110 using a frontend application for example, by requesting a username and password be input via a frontend user interface 114. The user token 122a may then be incorporated by the user device 108 into a user request that is submitted, when necessary as detailed below, to the cryptographic system 100 via, for example, the compute engine 104. In other embodiments, other methods of user token generation and/or authentication of a user of the frontend application/interface 114, as well as protocols for communicating authentication information and securing access of content to the network 112 may be implemented.

In some embodiments, each compute engine/service 104 may also be assigned a compute service token 124a that may be dynamically generated by the cryptographic system 100 (e.g. an authenticator component and the like) and provided to compute engine 104 on a single use and/or periodic basis. The cryptographic system 100 only issues or generates the compute service token 124a for the compute engine 104 if the compute engine 104 is operating in a high trust environment. For example, the compute engine 104 is only configured to execute approved code such as cryptographic operations, which has been approved by the cryptographic system 100. That is, users and/or administrators may not be able to write code for execution on compute engine 104 without approval from the operators of the cryptographic system 100. The compute service token 124a may be stored in compute engine 104 and also data storage 107 by key storage service 102 in a set of compute service tokens 124 associated with each of the compute engines 104 of the cryptographic system 100. In some embodiments, the compute service token 124a may be a single-use token and/or changed, updated or regenerated on a periodic basis (e.g. hourly or daily) and/or according to a schedule as the application demands. In some embodiments the generated compute service token 124a may be a Multipass (RTM) token generated based on Multipass (RTM) technology/techniques. The key storage service 102 may store an association between each compute service token 124a of the set of compute service tokens 124 with the corresponding compute engine/service 104.

An administrator of the cryptographic system 100 may create one or more cryptographic licenses 120 to be associated with one or more of the users. The cryptographic licenses include permissions for particular users to request the compute service 104 to perform cryptographic operations such as encryption and/or decryption. Cryptographic licenses, and their associated information (e.g., permissions), may be stored in the data storage 107. Each cryptographic license may include a cryptographic key and algorithm pair and specify permissions provided to a user for use in performing particular cryptographic operations. For a cryptographic key/algorithm pair, the administrator may include in the license data representative of one or more types of cryptographic algorithms that the user 110 is permitted to use, for what purpose the one or more types of cryptographic algorithms maybe used such as encryption, decryption, hashing and the like, and corresponding locations in the data storage 107 that identify the corresponding cryptographic keys for each type of cryptographic algorithm the user 110 is permitted to use. Any type of cryptographic algorithm and associated key may be used by the cryptographic system 100, key storage service 102 and/or compute engine/service 104. For example, one or more algorithms 406 such as Advanced Encryption Standard (AES) Synthetic Initialization Vector (SIV) type algorithms, Secure Hash Algorithm (SHA) 256 and/or SHA 512 type algorithms and the like may be used, and/or any other suitable cryptographic algorithm for encryption, decryption and/or hashing operations and/or any other type of cryptographic operation as the application demands.

For example, for each cryptographic license, an administrator may further specify the details of the license when creating the license or to modify an existing license. As noted above, a license may specify cryptographic operations that may be performed by the compute engine 104 on behalf of the user 110, such as cryptographically processing particular portions of data that may be encrypted (or decrypted) or limits to the amount of data that may be encrypted (or decrypted). A license may specify permissions required by a user to have a particular cryptographic operation performed. For example, a license may include a permission for a user 131 to have single value encryption performed by key storage service 102 and/or compute service 104 and/or decryption on behalf of the user 110 and user device 108, a permission that enables compute engine 104 to perform bulk encryption and/or decryption (e.g., on more than one value such as a full column of data values) on behalf of the user 110 or user device 108, and/or a permission for compute engine 104 and/or key storage service 102 to perform rate limited encryption and/or decryption on behalf of the user 110 or user device 108. A rate limited permission to perform operations may allow a user 110 to request the compute engine/service 104 or key storage service 102 to perform a limited number of operations within a given time frame. A license may also include information identifying the users with access to the license. A user 110 with access to the license may request to have the operations performed as specified in the license at the permission level specified in the license.

The rate limited permission may allow for a particular number of operations during a specified length of time. For example, the rate may be up to 10, 100, 1000 or more operations, or any number of operations that is appropriate or desired, within an hour, a day, a week, a month, a year or any time frame that is appropriate or desired.

In some embodiments, a user 110 of user device 108 may request a cryptographic operation (e.g. encryption or decryption) or a compute job with cryptographic operations to be performed on a portion of a large-scale dataset in which the portion of the large-scale dataset is large enough such that the key storage service 102 does not have the necessary computing resources to perform the cryptographic operation. The portion of the large-scale dataset may be a bulk dataset or full dataset. For example, the bulk dataset may include, without limitation, for example a dataset comprising many 1000s, tens of thousands, hundreds of thousands, millions and/or billions of rows of a dataset, terabytes of data values, rows and/or columns of a database or organization data and the like, and/or any sized portion of a large scale dataset that the key storage service 102 does not have the computing resources to cryptographically process said portion of the large-scale dataset according to the user request. Instead, the key storage service 102 is configured to securely delegate the cryptographic processing of the portion of the large-scale dataset to a compute engine/service 104 that has the necessary compute resources for performing such highscale cryptographic processing on the portion of large-scale dataset. The key storage service 102 and compute engine 104 are configured to not reveal the cryptographic key and/or cryptographic algorithm used to perform the requested cryptographic operation on behalf of the user 110 and user device 108. The key storage service 102 and compute service 104 may operate in a high-trust environment.

In this example embodiment, the user 110 and user device 108 already have a user token 122a that has been generated and associated with the user 110 as previously described. The key storage service 102 has also associated each user token that is generated with the corresponding user. For example, the user token 122a may be associated with the user 110, with the association stored by the key storage service 102 in, for example, data storage 107. When a user requests a cryptographic operation to be performed on the portion of the large-scale dataset, the user device 108 may send via the network 112 and user interface 114 a user request for performing the cryptographic operation, an indication of the portion of the large-scale dataset (e.g. the portion of the large-scale dataset or an indication of the location of the portion of the large-scale dataset in a database stored, for example, in storage 106). In some embodiments, the user request may also include an indication of the cryptographic license 120a of the user 110. This may be an identifier of the cryptographic license 120a of the user 110/user device 108.

In response to receiving, at the compute service 104 from the user device 108, the user request for performing the cryptographic operation (e.g. a compute job or task with cryptographic operations) on at least the portion of the large-scale dataset, the compute service 104 may send to the key storage service 102, a cryptographic key access request (e.g. get key request) corresponding to the received user request. The compute service 104 may set-up a dedicated communication session (or job session) with the key storage service 102 in relation to the user request of user 110 and device 108. This allows the key storage service 102 and compute service 104 to synchronously communicate requests and responses in relation to the user 110 and user device 108. Alternatively or additionally, a session identifier and/or user request/response identifier may be used by the compute service 104 and the key storage service 102 to keep track of each user request and corresponding cryptographic operations that may be performed on the portion of the large-scale dataset.

For the user request from user 110/device 108, the cryptographic key access request may include data representative of the user token of user 110 and a compute service token of the compute engine/service 104. The compute service token 124a is only generated by the cryptographic system 100 for the compute engine/service 104 if it is determined that the compute engine/service 104 is a highly trusted system or operating in a high trust environment. As previously discussed, the compute engine/service 104 maybe considered a high trust node/system if it only executes code such as, for example, cryptographic operations approved and/or authorized by the operator of the cryptographic system 100. Once this is approved and is the case, the key storage service 102 and compute service 104 may be considered to be operating within a high trust environment. If the key storage service 102 determines that the compute service 104 has a valid compute service token 124a, then the key storage service 102 is able to delegate the compute service 104 to perform cryptographic operations on behalf of the user 110 and device 108. That is, the key storage service 102 determines that the compute service/engine 104 is operating in a high trust environment and so is allowed access to the corresponding cryptographic key and/or algorithm for performing cryptographic operations on behalf of the user without revealing the cryptographic key and algorithm to the user. This provides the advantage that the user does not have direct or indirect access to the cryptographic keys and/or algorithms. For example, the user requesting the cryptographic operations does not have direct or indirect access to the cryptography key or cryptography algorithm.

On receipt of the cryptographic key access request, the key storage service 102 processes the user token 122a corresponding to the user request of user 110/device 108 and the compute service token 124a to determine whether to grant the compute service 104 access to data representative of the cryptographic key associated with the cryptographic operation of the user request from user device 108. The key storage service 102 also determines whether the user 110 has permission to have the cryptographic operation performed on the large-scale dataset by the compute service 104.

In some embodiments, for the user request from user 110/device 108, there may be multiple cryptographic key requests sent from the compute service 104 to the key storage service 102. For example, a first cryptographic key access request may include data representative of the user token of user 110. On receipt of the first cryptographic key access request, the key storage service 102 processes the user token 122a corresponding to the user request of user 110/device 108 to determines whether the user 110 is authorized and/or has permission to have the cryptographic operation performed on the large-scale dataset. The key storage service sends a response including data representative of whether the user has permission to have the cryptographic operations performed to the compute service 104. If the user has permissions/authorization, then the compute service 104 may send a second cryptographic key access request including the compute service token 124a to the key storage service. On receipt of the second cryptographic key access request, the key storage service 102 processes the compute service token 124a to determine whether to grant the compute service 104 access to data representative of at least the cryptographic key associated with the cryptographic operation of the user request from user device 108.

For example, on receipt of the compute service token 124a, the key storage service 102 compares the compute service token 124a with the current compute service token generated for the compute service 104 in the set of compute service tokens 124, to determine whether the received compute service token 124a is valid and hence whether the compute service 104 is operating in a high trust environment for it to be trusted with performing cryptographic operations. If this is not the case, then the key storage service 102 may, in response, deny the compute service 104 and the user 110 access to the corresponding cryptographic keys.

As well, the key storage service 102 may also process the received user token 122a in relation to the current user token associated with the user 110/device 108 stored in the set of user tokens 122 associated with users of the cryptographic system 100. The user token 122a may be used to authorize the user 110/ device 108 to have cryptographic operations performed based on the cryptographic license that has been associated with that user 110/device 108. Once the key storage service 102 has verified the user 110 is an authorized user by having a valid user token 122a, the key storage service 102 may retrieve the corresponding cryptographic license 120a associated with the user 110/device 108 from the set of cryptographic licenses 120 to determine whether the user has the requisite permissions to request the cryptographic operations of the user request to be performed on the portion of the large-scale dataset. If the user is not authorized or does not have the requisite permissions within their cryptographic license 120a to have the cryptographic operations performed, then the key storage service 102 may send a response to the compute service 104 and/or user device 108 denying access to the cryptographic key/algorithms associated with the cryptographic operations. However, if the user 110 is determined to be an authorized user, and the cryptographic license 120a associated with the user 110 has the required permissions in relation to the requested cryptographic operations being performed on the portion of the large-scale dataset, and the compute service 104 is determined to be a highly trusted compute service 104 operating in the high trust environment 116, then the key storage service 102 grants access to the compute service 104 for the corresponding cryptographic key and algorithm for use in performing, by the compute engine/service 104, the cryptographic operations (e.g. encryption or decryption) on the portion of the large-scale dataset requested by the user 110.

In response to the key storage service 102 granting access to the compute service 104, the key storage service 102 sends a response to the compute service 104 that includes data representative of the requested cryptographic key and the cryptographic algorithm associated with the cryptographic operations of the user request of the user 110/device 108. The compute service 104, on receiving the response granting access, is configured to proceed to cryptographically process the portion of the large-scale dataset based on the requested cryptographic operations (e.g. encryption or decryption), the received cryptographic key and cryptographic algorithm. In some embodiments, the compute service 104 may send a user response indicating that the portion of the large-scale dataset has been cryptographically processed (e.g. encrypted or decrypted). Alternatively or additionally, the compute service 104 may send the cryptographically processed portion of the large-scale dataset to the user device 108. In some embodiments, the compute service 104 may store the cryptographically processed portion of the large-scale dataset in a database that may be part of, or stored in data storage 106 and the like. In response to the key storage service 102 denying cryptographic key access to the compute service 104, the compute service 104 may send a user response to the user device 108 indicating denial of the user request.

In another example, should the user 110/device 108 request the same set of cryptographic operations (or same compute job with cryptographic operations) on an indicated large-scale dataset to be performed multiple times or according to a schedule, a cryptographic request including the user token does not necessarily need to be sent by the compute service 104 for each subsequent performance of the compute job if the user 110/device 108 has previously been granted permission/authorization in relation to that compute job. Rather the compute service 104 may simply perform the cryptographic operations of the compute job on the indicated large-scale dataset according to the schedule, where only a cryptographic request including the compute service token 124a is sent to the key storage service 102 prior to performing each of the scheduled cryptographic operations on behalf of the user. In another example, the request for performing the same set of cryptographic operations may be delegated to a schedule or a job scheduler (not shown) within the high-trust environment 116. The job scheduler may be configured to request the compute service 104 to perform the cryptographic operations based on a schedule, where, after each request, the compute service 104 provides the compute service token 124a to the key storage service 102 prior to performing each set of cryptographic operations. This provides the advantage of efficient use of the key storage service resources, where there is no need to re-send the user token 122a for the same set of cryptographic operations if these are to be run again by the compute service 104 at a later point in time. So long as the user 110 /device 108 does not change the content of the set of cryptographic operations (or compute job including the cryptographic operations), then after the first cryptographic request including the user token 122a and the first time the key storage service 102 authorizes the user 110/device 108 can have the set of cryptographic operations performed using the compute service 104, there is no need to re-send the user token 122a. On requesting subsequent requests, the compute service 104 simply resends its compute service token 124a to determine whether it is still granted permission (e.g. the compute service 104 still operates within the required high trust environment 116) to perform the required cryptographic operations.

In another example, when a user changes the content of a compute job that is required to perform cryptographic operations, the user sends a request for the compute service to perform the changed compute job along with the user token, where the compute service sends a cryptographic request with the user's token to the key storage service to check the user is authorised and has permission to have the changed compute job perform the cryptographic operations. If the key storage service determines the user has permission/authorisation, then it grants the compute service permission to perform the same operation on behalf of user. When compute service runs the compute job, the compute service sends the compute service token to the key storage service to check whether: a) the compute service can perform the cryptographic operations on behalf of user, and b) the compute service is high trust or operates in the required high trust environment. If this is the case, then the key storage service grants the compute service access to the required cryptographic data (e.g. cryptographic keys and/or algorithms) required by the compute service to perform the cryptographic operations on behalf of the user.

In some embodiments, subsequent cryptographic requests for the same compute job requested by a user may include the compute token and the associated user token or user identifier to enable the key storage service to retrieve the required cryptographic data associated with the user after granting the compute service permission to perform the cryptographic operations. This may also enable the key storage service to internally check that the user has already been authorised for each subsequent cryptographic request that it receives from the compute service in relation to the user and already authorised compute jobs.

The cryptographic operation requested by the user 110 may be encryption or decryption for bulk datasets and/or full datasets in which the cryptographic processing may be delegated to the compute service 104 by the key storage service 102.

FIGs. 1b-1d are block diagrams illustrating an example cryptographic system 130 based on cryptographic system 100 of FIG. 1a in which a user 110 of a user device 108 requests an encryption operation to be performed on a bulk dataset 134. The bulk dataset 134 may be a portion of a large-scale dataset or a large-scale dataset. For example, the bulk dataset may comprise raw data such as, without limitation, for example data that may be used in various practical applications, confidential data for use by a large organisation, data such as, without limitation, for example a customer data stored by an entity, such as a medical, financial, manufacturing, service, or other entity type. The raw data of the bulk dataset may comprise a plurality of raw data values, which may include multiple rows of information, such as, without limitation, for example account numbers, national insurance numbers, names, street addresses, for each of multiple user accounts, medical records and the like. The raw data of the bulk dataset 134 may be stored in a data storage 106 with which the compute engine/service 104 may communicate as shown in FIG. 1b. In any event, the user 110 of the user device 108 may need to upload the bulk dataset 134 to a database and/or require encryption of the bulk dataset 134 in which the cryptographic keys and algorithms used are not revealed to the user 110. In some embodiments, the user device 108 sends a user encryption request 132 to the compute engine 104, the user encryption request 132 including a user token 122a, an indication of a cryptographic license 120a associated with the user 108 and the bulk dataset 134. In some embodiments, the user encryption request 132 may include a user token 122a, an indication of a cryptographic license 120a associated with the user 108 and an indication of the location of the bulk dataset 134 on a database or storage device 106. The storage device 106 maybe connected to the compute engine/service 104. In other embodiments, the user encryption request 132 may include a user token 122a and an indication of the location of the bulk dataset 134 on a database or storage device 106, or the bulk dataset 134 requiring encryption. Although the cryptographic license 122a may be sent in the user encryption request, it is to be appreciated by the skilled person that this may not be necessary as the key storage service 102 may have a cryptographic license 122a associated with the user 110 stored in storage device 107, and can use the user token and/or user request to look-up the required cryptographic license 120a associated with the user 110.

FIG 1c is a block diagram of the cryptographic system 130 illustrating the response of the compute engine/service 104 when it receives the user encryption request 132. The compute engine 104 may retrieve the bulk dataset 134 in preparation for cryptographic encryption processing. In order to perform the requested encryption on the bulk dataset 134, the compute engine 104 establishes a job session or communication session with the key storage service 102 in relation to the user encryption request 132. The compute engine 104 sends a get key request 136 to the key storage service 102 for retrieving the required cryptographic key and algorithm associated with the encryption request 132 and in accordance with the cryptographic license 120a of the user 110. The get key request 136 includes data representative of the received user token 122a, a compute service token 124a of the compute engine/service 104 and/or an indication of the cryptographic license 120a. In some embodiments, the get key request 136 may include data representative of the received user token 122a and a compute service token 124a of the compute engine/service 104. Although the cryptographic license 122a may be sent in the get key request, it is to be appreciated by the skilled person that this may not be necessary as the key storage service 102 may have a cryptographic license 122a associated with the user 110 stored in storage device 107, and can use the user token and/or user request to look-up the required cryptographic license 120a associated with the user 110.

FIG id is a block diagram of the cryptographic system 130 illustrating the processing and response of the key storage service 102 when it receives the get key request 134 from the compute engine/service 104 in relation to the user encryption request 132 of user 110/device 108. The compute service token 124a is used to authenticate the compute engine/service 104 and determine whether it is still a high trust system, or operating in the high trust environment 116. For example, the key storage service 102 verifies that the compute service token 124a received from the compute engine 104 is valid and indicates that the compute service/engine 104 is operating in the high trust environment that the key storage service 102 operates within.

The compute service tokens 124 are allocated only to those compute service/engines 104 that satisfy the requirements of operating in the high trust environment 116 required by the key storage service 102 and/or the operators of the cryptographic system 130. The compute service token 124a maybe updated/changed on a periodic basis (e.g. hourly or daily) or according to a schedule, and is issued based on whether the compute engine/service 104 is still satisfies the requirements of operating in the high trust environment 116. This is because only high trust services may perform encryption of bulk datasets 134.

If the key storage service 102 determines that the received compute service token 124a indicates the compute service/engine 104 is high trust, then the key storage service 102 checks whether the received user token 122a is valid in relation to the user 110/user device 108. The key storage service 102 may check the received user token 120a is valid and that user 110 is an authorised user of the cryptographic system 130. If the user token 122a is valid, the key storage service 102 may use the user token 122a to identify the authorised user associated with the received user token 122a, and from this identify the cryptographic license 120a associated with the user 110 of user device 108. Once the cryptographic license 120a associated with the user 110 of user device 108 has been retrieved, the permitted encryption details may be checked to determine whether the user 110 of device 108 may request encryption of the bulk dataset 134. If the user is permitted to request encryption of the bulk dataset 134, then the key storage service 102 may delegate the required cryptographic operations in relation to the encryption request 132 to be performed by the compute engine 104.

Once all the above checks or determinations have passed or are valid, the key storage service 102 may grant the compute service/engine 104 access to the cryptographic key and algorithm by sending, during the communication session with the compute engine 104, a positive key response 139 to the compute engine 104 along with the required cryptographic key and algorithm that the compute engine 104 may use to encrypt (e.g. cryptographically process) the bulk dataset 134 into an encrypted bulk dataset 140). However, if any of the above checks or determinations performed by the key storage service 102 in relation to the received user token 122a, the received compute token 124a, and/or the cryptographic license 120a were negative or invalid, then the key storage may deny access to the cryptographic keys and algorithm associated with the requested encryption by the user 110 of device 108 by sending, during the communication session with the compute engine 104, a negative key response 139 to the compute engine 104 along with an indication denying access to the required cryptographic key and algorithm. The compute service engine 104 may forward this to the user device 108.

FIG. 1e is a block diagram of the cryptographic system 130 illustrating the cryptographic processing performed at the compute engine 104 in response to receiving a positive key response 139 from the key storage service 102 along with the required cryptographic key and algorithms for performing the cryptographic operations on the bulk dataset 134 in relation to the user encryption request 132 from user 110 of device 108. The compute engine/service 104 encrypts the bulk dataset 134 using the received cryptographic key and algorithm to generate encrypted bulk dataset 140. In some embodiments, the compute service 104 may send an encryption response 142 returning the encrypted bulk dataset 140 to the user 110 of user device 108. In some embodiments, the compute service 104 may store the encrypted bulk dataset 140 in a database or location indicated by the user 110 of user device 108 in a storage device, such as storage device 106 and/or any other storage device or cloud storage and the like.

Although FIGs. 1b to 1e describes an encryption of a bulk dataset 132, this is by way of example only, it is to be appreciated by the skilled person that other cryptographic operations such as, without limitation, for example decryption of bulk dataset and/or hashing of a bulk dataset and/or any other cryptographic operation may be used and or applicable as the application demands.

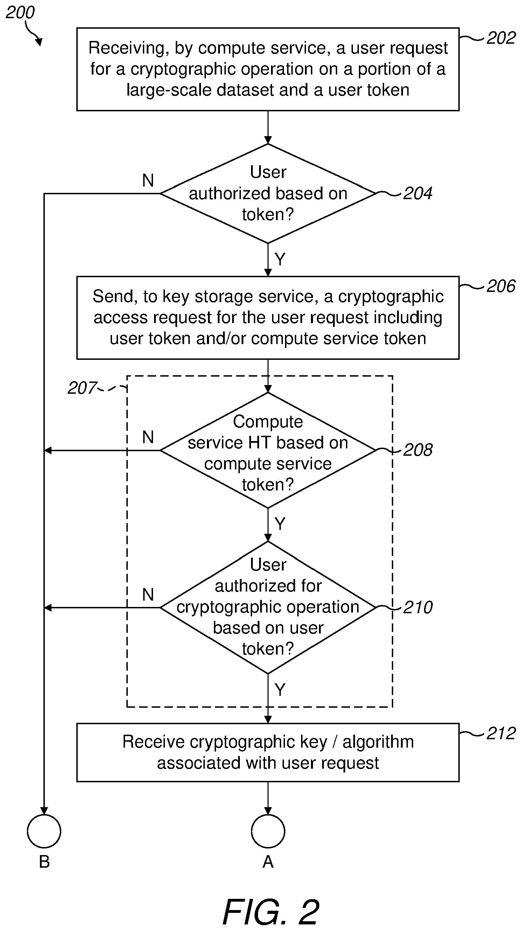

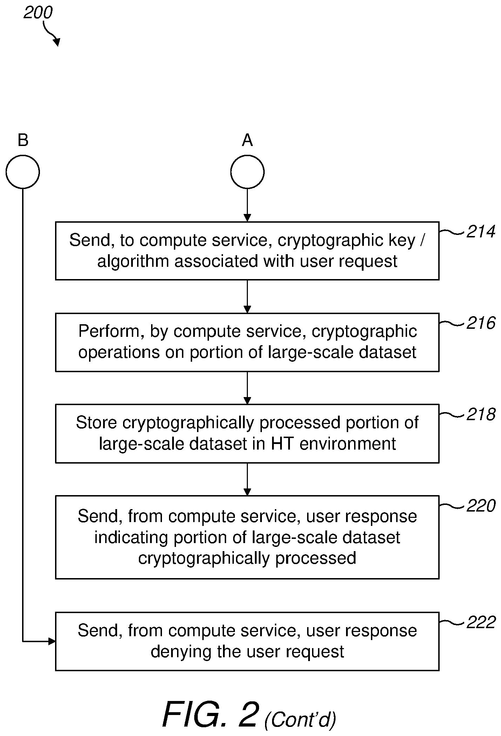

FIG. 2 is a flow diagram indicating operations of a cryptographic computing method 200 performed by one or more processors of an appropriate computing system, for example using the cryptographic system in a high trust environment as shown in FIGs. 1a-1e. The operations may be performed by software, firmware, hardware or a combination thereof. The operations may be for performing a cryptographic operation in a high-trust environment including a compute service and a key storage service. The operations of the cryptographic computing method 200 performed by the cryptographic system may include the following:
A first operation 202 may comprise receiving, at the compute service from a user device, a user request for performing a cryptographic operation on at least a portion of a large-scale dataset. The user request including a user token associated with a user of the user device.

A second operation 204 may comprise determining whether the user is authorised to make the user request based on the user token. If it is determined to be authorised, then proceed to the third operation 206, otherwise proceed to the twelfth operation 222.

A third operation 206 may comprise sending, by the compute service to the key storage service, a cryptographic key access request corresponding to the received user request. The cryptographic key access request including data representative of the user token and a compute service token.

A fourth operation 207 may comprise processing, at the key storage service, the user token and compute service token to determine whether to grant the compute service access to data representative of the cryptographic key associated with the cryptographic operation of the user request and whether the user has permission to have the cryptographic operation performed.

The fourth operation 207 may further comprise a fifth operation 208 that may comprise determining whether the compute service is a highly trusted compute service or operating in the high trust environment, if this is the case then proceed to a sixth operation 210, otherwise proceed to the twelfth operation 222.

The fourth operation 207 may further comprise a sixth operation 210 that may comprise determining whether the user is authorised for the cryptographic operation based on the user token, if the user is authorised, then proceed to a seventh operation 212, otherwise proceed to the twelfth operation 222.

Although operation 208 may be performed prior to operation 210, this is by way of example only and the invention is not so limited, it is to be appreciated by the skilled person that operation 210 may be performed prior to operation 208.

A seventh operation 212 may comprise, in response to the key storage service granting access to the compute service, retrieving the cryptographic key/algorithm associated with the user and the user request.

An eighth operation 214 may comprise sending, from the key storage service, data representative of the requested cryptographic key and the cryptographic algorithm associated with the cryptographic operation of the user request.

A ninth operation 216 may comprise cryptographically processing, by the compute service, the portion of the large-scale dataset based on the received cryptographic key and cryptographic algorithm.

A tenth operation 218 may comprise storing the cryptographically processed portion of the large-scale dataset in storage in the high trust environment.

An eleventh operation 220 may comprise sending a user response indicating the portion of the large-scale dataset has been cryptographically processed to the user device.

A twelfth operation 222 may comprise, in response to the key storage service denying cryptographic key access to the compute service or denying permission/authorisation for the user device to request the cryptographic operation, sending, by the compute service to the user device, a user response indicating denial of the user request.

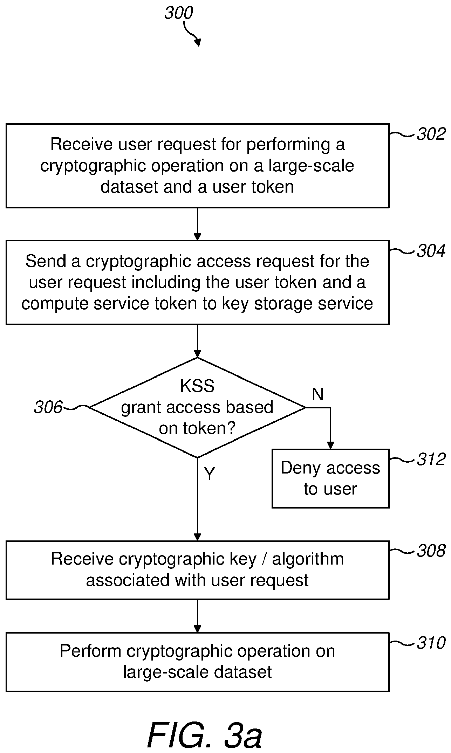

FIG. 3a is a flow diagram indicating operations of a cryptographic compute service method 300 performed by one or more processors of an appropriate computing system, for example using the compute service in a high trust environment as shown in in FIGs. 1a-1e. The operations may be performed by software, firmware, hardware or a combination thereof. The operations may be for performing a cryptographic operation in a high-trust environment including the compute service and a key storage service. The operations of the cryptographic compute service method 300 performed by the compute service may include the following:
A first operation 302 may comprise receiving, from a user device, a user request for performing a cryptographic operation on at least a portion of a large-scale dataset. The user request including a user token associated with a user of the user device.

A second operation 304 may comprise sending, to the key storage service, a cryptographic key access request corresponding to the received user request. The cryptographic key access request including data representative of the user token and a compute service token.

A third operation 306 may comprise determining whether the key storage service granted access based on the user token and the compute service token. In response to the key storage service granting cryptographic access to the compute service based on the user token and compute service token, proceeding to the fourth operation 308, otherwise proceed to the sixth operation 312.

A fourth operation 308 may comprise receiving, from the key storage service, data representative of the requested cryptographic key and the cryptographic algorithm associated with the cryptographic operation of the user request.

A fifth operation 310 may comprise cryptographically processing the portion of the large-scale dataset based on the received cryptographic key and cryptographic algorithm. As an option, the fifth operation 310 may further comprise sending, to the user device, a user response indicating the portion of the large-scale dataset has been cryptographically processed. Alternatively or additionally, the fifth operation 310 may further include storing the cryptographically processed portion of the large-scale dataset in a database or other storage medium and the like.

A sixth operation 312 may comprise, in response to the key storage service denying cryptographic key access to the compute service based on the user token and compute service token, sending, to the user device, a user response indicating denial of the user request.

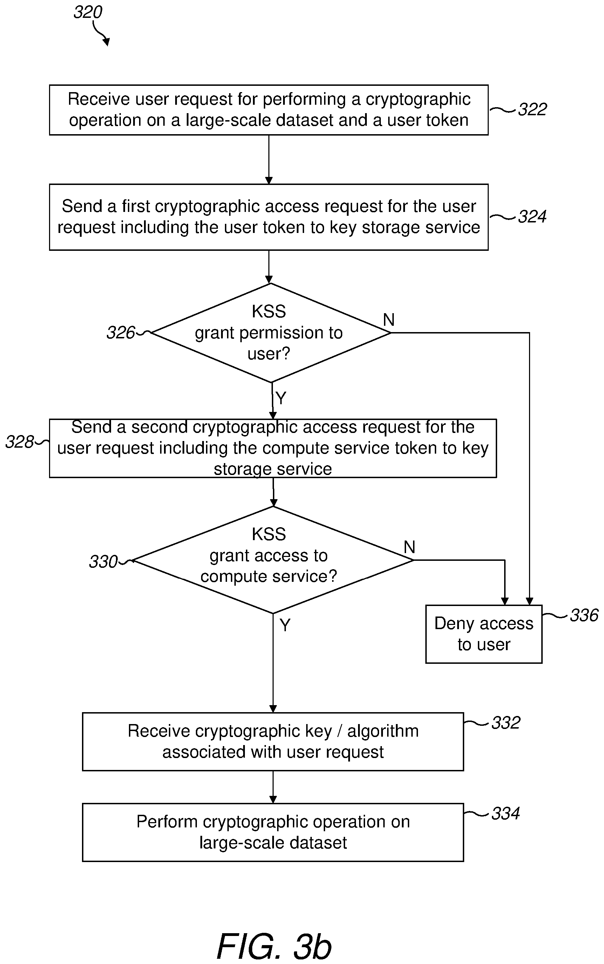

FIG. 3b is a flow diagram indicating operations of a cryptographic compute service method 320 performed by one or more processors of an appropriate computing system, for example using the compute service in a high trust environment as shown in in FIGs. 1a-1e. The operations may be performed by software, firmware, hardware or a combination thereof. The operations may be for performing a cryptographic operation in a high-trust environment including the compute service and a key storage service. The operations of the cryptographic compute service method 320 performed by the compute service may include the following:
A first operation 322 may comprise receiving, from a user device, a user request for performing a cryptographic operation on at least a portion of a large-scale dataset. The user request including a user token associated with a user of the user device.

A second operation 324 may comprise sending, to the key storage service, a first cryptographic key access request corresponding to the received user request. The first cryptographic key access request including data representative of the user token.

A third operation 326 may comprise determining whether the key storage service granted access based on the user token. In response to the key storage service granting authorisation and/or permission for the user request to the compute service based on the user token, proceeding to the fourth operation 328, otherwise proceed to the eighth operation 336.

A fourth operation 328 may comprise, on receiving a response indicating user is authorised and/or permitted to request the cryptographic operations, sending, to the key storage service, a second cryptographic key access request corresponding to the received user request. The second cryptographic key access request including data representative of a compute service token associated with the compute service.

A fifth operation 330 may comprise determining whether the key storage service granted access based on the compute service token. In response to the key storage service granting cryptographic access to the compute service based on the compute service token, proceeding to the sixth operation 332, otherwise proceed to the eighth operation 336.

A sixth operation 332 may comprise receiving, from the key storage service, data representative of the requested cryptographic key and the cryptographic algorithm associated with the cryptographic operation of the user request.

A seventh operation 334 may comprise cryptographically processing the portion of the large-scale dataset based on the received cryptographic key and cryptographic algorithm. As an option, the seventh operation 334 may further comprise sending, to the user device, a user response indicating the portion of the large-scale dataset has been cryptographically processed. Alternatively or additionally, the seventh operation 334 may further include storing the cryptographically processed portion of the large-scale dataset in a database or other storage medium and the like.

An eighth operation 336 may comprise, in response to the key storage service denying authorisation and/or permission for the user request, and/or denying cryptographic key access to the compute service based on the user token and/or compute service token, sending, to the user device, a user response indicating denial of the user request.

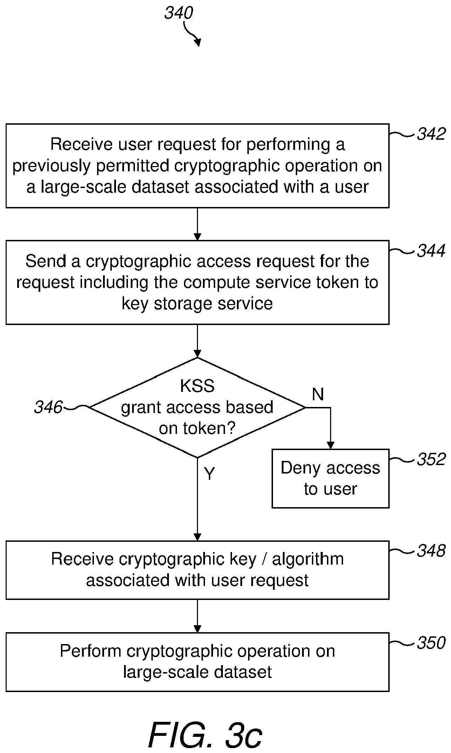

FIG. 3c is a flow diagram indicating operations of another cryptographic compute service method 340 performed by one or more processors of an appropriate computing system, for example using the compute service in a high trust environment as shown in in FIGs. 1a-1e. The operations may be performed by software, firmware, hardware or a combination thereof. The operations may be for performing a cryptographic operation in a high-trust environment including the compute service and a key storage service. The operations of the cryptographic compute service method 340 performed by the compute service may include the following:
A first operation 342 may comprise receiving, from a user device or job scheduler, a request for performing a previously permitted cryptographic operation on at least a portion of a large-scale dataset associated with a user. As an option, the request may further include a user token or user identifier associated with a user of the user device.

A second operation 344 may comprise sending, to the key storage service, a cryptographic key access request corresponding to the received request. The cryptographic key access request including data representative of the compute service token.

As an option, prior to sending, the compute service may performing determining, based on the user token or user identifier, whether the associated user has been previously permitted or authorised in relation to the cryptographic operations by the key storage service, if so, then proceed to send the cryptographic key access request to the key storage service with the compute service token, if not, then either proceed to sixth operation 352 to deny access to the user (e.g. if a user token is unavailable) or if a user token is available in the request perform the cryptographic compute service method 300 or 320, which includes the key storage service authorising the user in relation to the cryptographic operations.

A third operation 346 may comprise determining whether the key storage service granted access based on the compute service token. In response to the key storage service granting cryptographic access to the compute service based on the compute service token, proceeding to the fourth operation 348, otherwise proceed to the sixth operation 312.

A fourth operation 348 may comprise receiving, from the key storage service, data representative of the requested cryptographic key and the cryptographic algorithm associated with the cryptographic operation of the request.

A fifth operation 350 may comprise cryptographically processing the portion of the large-scale dataset based on the received cryptographic key and cryptographic algorithm. As an option, the fifth operation 350 may further comprise sending, to the user device, a user response indicating the portion of the large-scale dataset has been cryptographically processed. Alternatively or additionally, the fifth operation 350 may further include storing the cryptographically processed portion of the large-scale dataset in a database or other storage medium and the like.

A sixth operation 352 may comprise, in response to the key storage service denying cryptographic key access to the compute service based on the compute service token, sending, to the user device or job scheduler, a response indicating denial of the request.

As descried in FIGs. 3a-3c, as an option, in operations 310, 334, 350 after cryptographic processing according to the user request using cryptographic data including, for example, a cryptographic key and/or cryptographic algorithm provided by the key storage service, the compute service may securely remove or delete the data representative of the cryptographic data (e.g. cryptographic key and/or cryptographic algorithm) stored during the cryptographic processing by the compute service in relation to the user request.

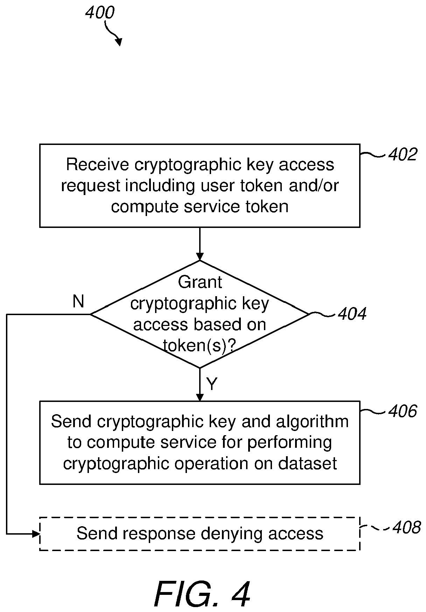

FIG. 4 is a flow diagram indicating operations of a cryptographic key storage service method 400 performed by one or more processors of an appropriate computing system, for example using the key storage service in a high trust environment as shown in in FIGs. 1a-1e. The operations may be performed by software, firmware, hardware or a combination thereof. The operations may be for performing a cryptographic operation in a high-trust environment including a compute service and the key storage service. The operations the cryptographic key storage service method 400 performed by the key storage service may include the following:
A first operation 402 may comprise receiving, from the compute service, a cryptographic key access request corresponding to a user request for performing a cryptographic operation on at least a portion of a large-scale dataset. The user request including a user token associated with a user of the user device. The cryptographic key access request including data representative of the user token and/or a compute service token.

As described in FIG. 3a, the compute service may supply both the user token and the compute service token for receiving grant of the access request when the user is authorized and/or permitted to request the cryptographic operations. As described in FIG 3b, the compute service may initially supply user token for receiving grant that user is authorized and/or permitted to request the cryptographic operations, and, on receiving such grant, the compute service may send in a subsequent access request the compute service token for receiving grant of the access request for performing the cryptographic operations. As described in Fig 3c, should the user have previously been authorized/permitted to request performance of the cryptographic operations, the compute service may, if another request to perform the same cryptographic operations associated with the user is received, to instead send the compute service token to the key storage service.

A second operation 404 may comprise processing the user token and/or compute service token to determine whether to authorize/permit the user request and/or to determine whether to grant, when the user is authorized/permitted, the compute service access to data representative of the cryptographic key associated with the cryptographic operation of the user request. If the key storage service grants the compute service access based on the user token and/or compute service token, then proceed to the third operation 406, otherwise proceed to the fourth operation 408.

A third operation 406 may comprise, in response to the key storage service granting access to the compute service, sending, from the key storage service, data representative of the requested cryptographic key and the cryptographic algorithm associated with the cryptographic operation of the user request. The compute service may cryptographically process the portion of the large-scale dataset based on the received cryptographic key and cryptographic algorithm.

As an option, a fourth operation, in response to the key storage service denying access to the computer service, sending a response to the compute service and/or user denying access.

It will be appreciated that certain operations of any of FIGs 2-4 may be omitted or reordered in some embodiments.

In some example embodiments, each user may be associated with a cryptographic license stored in the high trust environment, and determining whether said user has permission to request said cryptographic operation based on retrieving the cryptographic license associated with the user.

In some example embodiments, after performing the cryptographic operations using the cryptographic data including, for example, a cryptographic key and/or cryptographic algorithm provided by the key storage service, the compute service may securely remove or delete the data representative of the cryptographic data (e.g. cryptographic key and/or cryptographic algorithm) stored by the compute service whilst performing the cryptographic operations in relation to the user request.

In some embodiments, determining whether said compute service is authorized to perform said cryptographic operation on at least said portion of the large-scale dataset based on said compute service token.

In some embodiments, each authorized user is linked to a cryptographic license stored within the high trust environment. Each cryptographic license of an authorized user specifying data representative of permissions for said user to have one or more cryptographic operations performed in relation to corresponding data of a large-scale dataset, said processing the user token further including: determining the user of the user device providing the user token is an authorized user; retrieving a linked cryptographic license corresponding to the authorized user; and determining whether said authorized user has permissions to request one or more cryptographic operations to be performed on at least said portion of the large-scale dataset based on the retrieved cryptographic license.

In some embodiments, the one or more cryptographic operations may include at least one from the group of: encryption; decryption; hashing; and/or any other cryptographic function or operation.

In some embodiments, the one or more cryptographic operations may include an encryption cryptographic operation and the portion of the large-scale dataset is at least one from the group of: bulk dataset, full dataset, or a dataset that the key storage service is incapable of processing.

In some embodiments, the one or more cryptographic operations may include an encryption or decryption cryptographic operation and the portion of the large-scale dataset, wherein the portion of large-scale dataset of large enough that the key storage service is incapable of performing the encryption or decryption, where the compute service has the computing resources to perform the encryption or decryption of the portion of the large-scale dataset.

In some embodiments, the one or more cryptographic operations may include a decryption cryptographic operation and the portion of the large-scale dataset and it is determined that the key storage service is capable of performing the decryption. The large-scale dataset is determined to be small enough for the key storage service to perform the decryption on the portion of the large-scale dataset. The key storage service performs the decryption operation and returns the result to the user via the compute service.

In some embodiments, the user requesting the cryptographic operations does not have direct or indirect access to the cryptography key or cryptography algorithm.

In some example embodiments, the aforementioned operations maybe performed by executing, using one or more processors of a data processing apparatus, a computer program which may optionally be stored on a non-transitory computer readable medium.

In some example embodiments, a computer program, optionally stored on a non-transitory computer readable medium which, when executed by one or more processors of a data processing apparatus, causes the data processing apparatus to carry out the computer-implemented method according to any of the aforementioned operations described herein and/or with reference to FIGs 1a to 4.

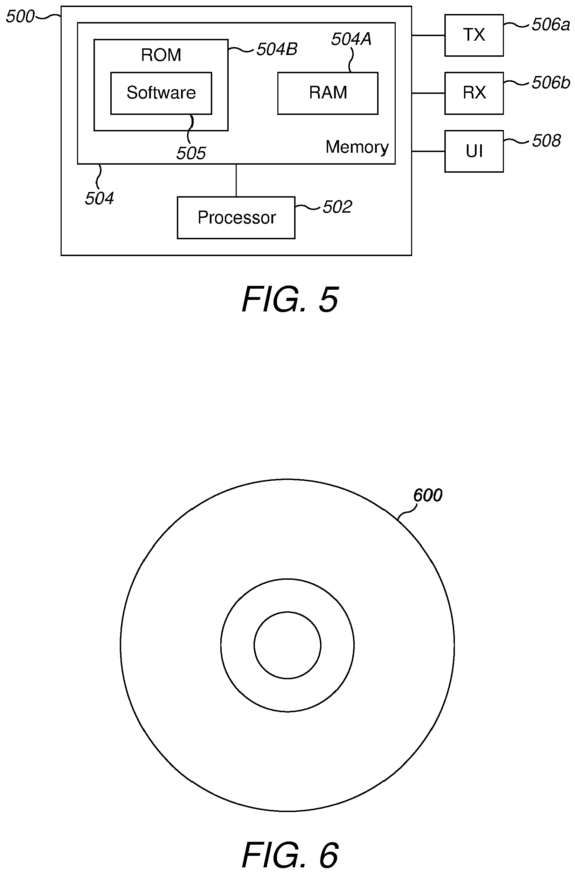

FIG. 5 shows an apparatus 500 according to some example embodiments, which may be part of a key storage service, compute engine/compute service, user device and the like for implementing the apparatus and/or methods as described herein. The apparatus 500 may be configured to perform the operations described herein, for example operations described with reference to any disclosed process and/or apparatus. The apparatus 500 comprises at least one processor 502 and at least one memory 504 directly or closely connected to the processor 502. The memory 504 includes at least one random access memory (RAM) 504a and at least one read-only memory (ROM) 504b. Computer program code (software) 505 is stored in the ROM 502b. The apparatus may be connected to a transmitter (TX) 506a and a receiver (RX) 506b. The apparatus may, optionally, be connected with a user interface (UI) 508 for instructing the apparatus and/or for outputting data. The at least one processor 502, with the at least one memory 504 and the computer program code 505 are arranged to cause the apparatus to at least perform at least the method according to any preceding process, for example as disclosed in relation to the schematic and/or flow diagrams or operations of any of FIGs. 1a to 4 and related features thereof.

FIG. 6 shows a non-transitory media 600 according to some embodiments. The non-transitory media 600 is a computer readable storage medium. It may be for example a CD, a DVD, a USB stick, a blue ray disk, etc. The non-transitory media 600 stores computer program code, causing an apparatus to perform the method of any preceding process for example as disclosed in relation to the flow diagrams and related features thereof.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above maybe used independently of one another, or may be combined in various ways. All possible combinations and sub combinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements maybe added to, removed from, or rearranged compared to the disclosed example embodiments.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A computer-implemented method for performing a cryptographic operation in a high-trust environment comprising a compute service and key storage service, the method comprising:
receiving, at the compute service from a user device, a user request for performing a cryptographic operation on at least a portion of a large-scale dataset, the user request including a user token associated with a user of the user device;
sending, by the compute service to the key storage service, a cryptographic key access request corresponding to the received user request, the cryptographic key access request including data representative of the user token and/or a compute service token;
processing, at the key storage service, the user token and/or compute service token to determine whether the user has permission to have the cryptographic operation performed and/or whether to grant the compute service access to data representative of the cryptographic key associated with the cryptographic operation of the user request when user has permission;
in response to the key storage service granting access to the compute service, performing the steps of:
sending, from the key storage service, data representative of the requested cryptographic key and the cryptographic algorithm associated with the cryptographic operation of the user request;
cryptographically processing, by the compute service, the portion of the large-scale dataset based on the received cryptographic key and cryptographic algorithm; and
sending a user response indicating the portion of the large-scale dataset has been cryptographically processed;
in response to the key storage service determining user does not have permission and/or denying cryptographic key access to the compute service, sending, by the compute service, a user response indicating denial of the user request.

2. A computer-implemented method for performing a cryptographic operation by a compute service in a high-trust environment comprising the compute service and a key storage service, the method comprising:
receiving, from a user device, a user request for performing a cryptographic operation on at least a portion of a large-scale dataset, the user request including a user token associated with a user of the user device;
sending, to the key storage service, a cryptographic key access request corresponding to the received user request, the cryptographic key access request including data representative of the user token and/or a compute service token, wherein the key storage service is configured to process the user token and/or compute service token for determining whether the user has permission to have the cryptographic operation performed and/or whether to grant the compute service access to data representative of the cryptographic key associated with the cryptographic operation of the user request when user has permission;
in response to the key storage service granting cryptographic access to the compute service, performing the steps of:
receiving, from the key storage service, data representative of the requested cryptographic key and the cryptographic algorithm associated with the cryptographic operation of the user request;
cryptographically processing the request portion of the large-scale dataset based on the received cryptographic key and cryptographic algorithm; and
sending, to the user device, a user response indicating the portion of the large-scale dataset has been cryptographically processed;
in response to the key storage service determining user does not have permission and/or denying cryptographic key access to the compute service based on the user token and/or compute service token, sending, to the user device, a user response indicating denial of the user request.

3. A computer-implemented method for performing a cryptographic operation by a key storage service in a high-trust environment comprising a compute service and the key storage service, the method, performed by the key storage service, comprising:
receiving, from the compute service, a cryptographic key access request corresponding to a user request for performing a cryptographic operation on at least a portion of a large-scale dataset, the user request including a user token associated with a user of the user device, the cryptographic key access request including data representative of the user token and/or a compute service token;
processing the user token and/or compute service token to determine whether the user has permission to have the cryptographic operation performed and/or whether to grant the compute service access to data representative of the cryptographic key associated with the cryptographic operation of the user request when user has permission;
in response to the key storage service granting access to the compute service, sending, from the key storage service, data representative of the requested cryptographic key and the cryptographic algorithm associated with the cryptographic operation of the user request, wherein the compute service cryptographically processes the portion of the large-scale dataset based on the received cryptographic key and cryptographic algorithm.

4. The computer-implemented method according to any of claims 1 to 3, wherein each user is associated with a cryptographic license stored in the high trust environment, and determining whether said user has permission to request said cryptographic operation based on retrieving the cryptographic license associated with the user based on said user token.

5. The computer-implemented method according to any of claims 1 to 4, further comprising sending, by the compute service to the key storage service, the cryptographic key access request corresponding to the received user request, the cryptographic key access request including data representative of the user token and the compute service token.

6. The computer-implemented method according to any of claims 1 to 4, further comprising:
sending, by the compute service to the key storage service, a first cryptographic key access request corresponding to the received user request, the first cryptographic key access request including data representative of the user token;
processing, at the key storage service, the user token to determine whether the user has permission to have the cryptographic operation performed;
in response to the key storage service determining the user has permission, sending, by the compute service to the key storage service, a second cryptographic key access request corresponding to the received user request, the second cryptographic key access request including data representative of the compute service token; and
processing, at the key storage service, the compute access token to determine whether to grant the compute service access to data representative of the cryptographic key associated with the cryptographic operation of the user request when user has permission.

7. The computer-implemented method according to any preceding claim, wherein the key storage service previously granted the user permission to a previous user request, the method further comprising receiving a further request associated with the previous user request, and sending, by the compute service to the key storage service, the cryptographic key access request corresponding to the received request, the cryptographic key access request including data representative of the compute service token; and
processing, at the key storage service, the compute access token to determine whether to grant the compute service access to data representative of the cryptographic key associated with the cryptographic operations of the request when user has permission.

8. The computer-implemented method according to any preceding claim, determining whether said compute service is authorized to perform said cryptographic operation on at least said portion of the large-scale dataset based on said compute service token.

9. The computer-implemented method according to claim 8, wherein the compute service token is generated for the compute service when the compute service operates in the high trust environment, and determining whether said compute service is authorized to perform said cryptographic operation further comprising determining the compute service operates in the high trust environment based on said compute service token.

10. The computer-implemented method according to claim 9, wherein the compute service operates in the high trust environment when the compute service only executes cryptographic operations approved or authorized by the operator of the high trust environment.

11. The computer-implemented method according to any preceding claim, wherein each authorized user is linked to a cryptographic license stored within the high trust environment, each cryptographic license of an authorized user specifying data representative of permissions for said user to have one or more cryptographic operations performed in relation to corresponding data of a large-scale dataset, said processing the user token further comprising:
determining the user of the user device providing the user token is an authorized user;
retrieving a linked cryptographic license corresponding to the authorized user; and
determining whether said authorized user has permissions to request one or more cryptographic operations to be performed on at least said portion of the large-scale dataset based on the retrieved cryptographic license.

12. The computer-implemented method according to any preceding claim, wherein the one or more cryptographic operations comprises at least one from the group of: encryption; decryption; hashing; and/or any other cryptographic function or operation.

13. The computer-implemented method according to any preceding claim, wherein the one or more cryptographic operations comprises an encryption cryptographic operation and the portion of the large-scale dataset is at least one from the group of: a bulk dataset or full dataset.

14. The computer-implemented method according to any preceding claim, wherein the one or more cryptographic operations comprises an encryption or decryption cryptographic operation to be performed on the portion of the large-scale dataset, wherein the portion of large-scale dataset is large enough that the key storage service is incapable of performing the encryption or decryption operation, wherein the compute service has the computing resources to perform the encryption or decryption of the portion of the large-scale dataset.

15. The computer-implemented method according to any of claims 1 to 13, wherein the one or more cryptographic operations comprises a decryption cryptographic operation and the portion of the large-scale dataset is determined to be small enough for the key storage service to perform the decryption on the portion of the large-scale dataset.
